# EUROPEAN PATENT APPLICATION

(11) **EP 4 715 538 A1**
(43) Date of publication of application: **25.03.2026**
(21) Application number: 24201430.6
(22) Date of filing: 19.09.2024
(51) Int. Cl.: G06F 3/041, G06F 3/045

(54) **FILM, DISPLAY INCLUDING SUCH A FILM, AND METHOD FOR PRODUCING A FILM**

(71) Applicant: Valeo Comfort and Driving Assistance, 94000 Créteil (FR)
(72) Inventor: SCHMITT, Martin, 96476 Bad Rodach (DE); MUSAT, Ciprian, 94000 Créteil (FR); IRZYK, Michael, 94000 Créteil (FR)
(74) Representative: Delplanque, Arnaud

(57) **Abstract**

A film comprises a transparent or translucent polarizing sheet defining two main faces.

A sensor including a translucent or transparent material (15) having an electrical property varying upon deformation lies on one of said main faces.

A display including such a film and a method for producing a film are also described.

## Description

The invention relates to the technical field of films that may be used in the construction of displays.

More precisely the invention relates to a film, a display including such a film, and a method for producing a film.

### BACKGROUND INFORMATION AND PRIOR ART

Touch or force sensing displays include sensors integrated in the stack of layers forming the display.

The structure of displays tends to get simpler and simpler, and the thickness of the stack constantly reduces over time, such that the integration of touch or force sensors becomes problematic.

### SUMMARY OF THE INVENTION

In this context, the invention provides a film comprising a transparent or translucent polarizing sheet defining two main faces, characterised in that a sensor including a translucent or transparent material having an electrical property varying upon deformation lies on one of said main faces.

A sensor capable of measuring deformation is thus integrated on a film having a polarizing function. This film can thus be integrated as a polarizer in a display stack and the sensor can then be used as a touch or force sensor by measuring deformations induced when the user presses on the display.

The film may also include one or several of the following features:
- the sensor further includes at least one conductive track contacting said material;
- said at least one conductive track includes two conductive tracks terminating each at an end portion;
- said material is interposed between both end portions and contacts both end portions;
- each end portion has a finger structure;
- said at least one conductive track is made of an electrically conductive transparent or translucent polymer;
- said at least one conductive track is made of a mesh of metal wires;
- said material is a nanoparticle ink printed on said one of said main faces;
- said material is a piezoelectric ink printed on said one of said main faces. The invention also provides a display including:
- a panel carrying a matrix of elements capable of altering the polarization of incident light in a controllable manner;
- a film as proposed above covering at least a portion of the panel.

The display may further comprise a lighting module capable of producing a light beam towards the panel. The film may for instance be interposed between the lighting module and the panel.

The invention also proposes a method for producing a film, including the following steps:
- depositing a translucent or transparent material having an electrical property varying upon deformation on a main face of a transparent or translucent polarizing sheet;
- forming a sensor including said material.

The material may in practice be printed onto the main face.

Other features and advantages of the embodiments of the present invention will be better understood upon reading of preferred embodiments thereof with reference to the appended drawings.

### BRIEF DESCRIPTION OF THE DRAWINGS

Figure 1 shows an exemplary embodiment of a film according to the invention;
Figure 2 is a detail view of a portion denoted A in Figure 1;
Figure 3 shows a cross section corresponding to line B-B in Figure 2;
Figure 4 shows another possible embodiment of a film according to the invention; and
Figure 5 schematically represents a possible embodiment of a display comprising a film according to the invention.

### DETAILED DESCRIPTION OF EXAMPLE(S)

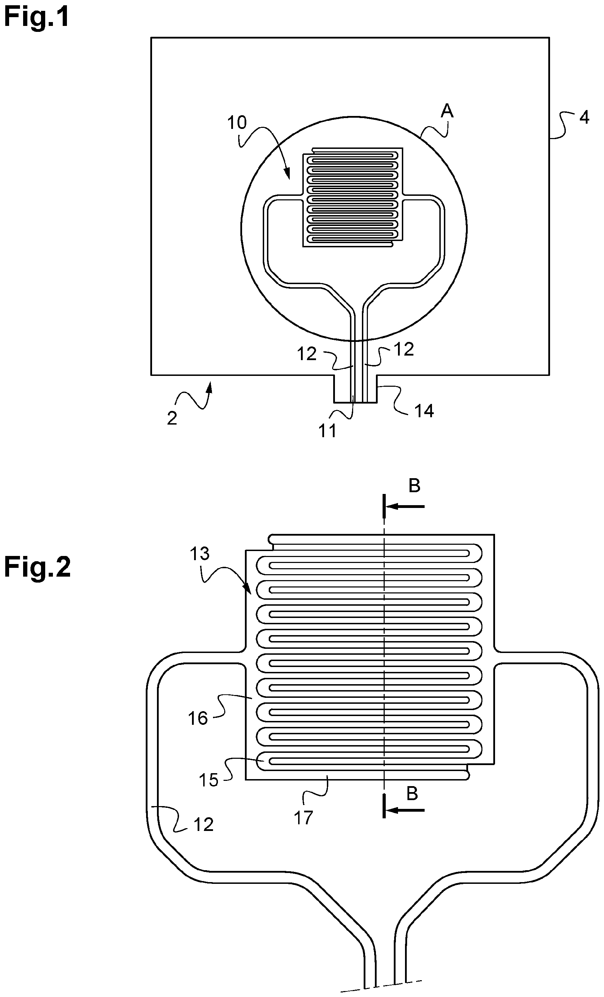

Figure 1 shows a film 2 comprising a transparent or translucent polarizing sheet 4 and a sensor 10 lying (e.g. deposited) on one of the two main faces of the polarizing sheet 4.

The polarizing sheet 4 is for instance a polymer-based multilayer optical film. The polarizing sheet 4 may for instance transmit light (*i.e.* in practice at least 80% of light) having a first polarization state and reflects (and/or absorbs) light (*i.e.* in practice at least 80% of light) having a second polarization state distinct from the first polarization state.

The first polarization state is for instance a polarization of light in a given direction and the second polarization state may then correspond to a polarization of light in another direction orthogonal to the given direction.

The polarization sheet 4 may in practice be formed of a 3M^{™} Advanced Polarizing Film (APF).

The sensor 10 includes a pair of conductive tracks 12, each conductive track extending between a connection portion 11 and an end portion 13 where the concerned conductive track 12 contacts a material 15 having an electrical property varying upon deformation.

Thus, material 15 lies between respective end portions 13 of both conductive tracks 12 and is in contact with both these end portions 13 such that a variation of the electrical property of material 15 caused by a deformation of material 15 can be detected and/or measured by connecting a suitable electronic circuit to connection portions 11 of both conductive tracks 12.

Material 15 is transparent or translucent to allow light incident on the film 2 (onto the face where the sensor 10 is located) to pass through material 15 and into the polarizing sheet 4.

Material 15 is for instance a (transparent as just mentioned) piezoelectrical ink. In this case, deformation of material 15 results in charge transfers across the material 15, which charge transfers are detectable by an electronic circuit connected to connection portions 11 of both conductive tracks 12.

According to a possible variation, material 15 may be a (transparent) nanoparticle ink, as described for instance in the patent application published under WO 2018/130 672. In this case, deformation of material 15 results in a change of resistivity of the material 15, which change of resistivity is detectable by an electronic circuit connected to connection portions 11 of both conductive tracks 12.

In embodiments where material 15 is an ink, material 15 may be printed onto the concerned face of the polarizing sheet 4.

In the embodiment described here, each end portion 13 is conformed as a finger structure, as visible on Figure 2. In this case, each end portion 13 comprises a base 16 and a plurality of fingers 17 extending parallel to one another and perpendicularly from the base 16 (in a plane parallel to the plane of extension of the polarizing sheet 4).

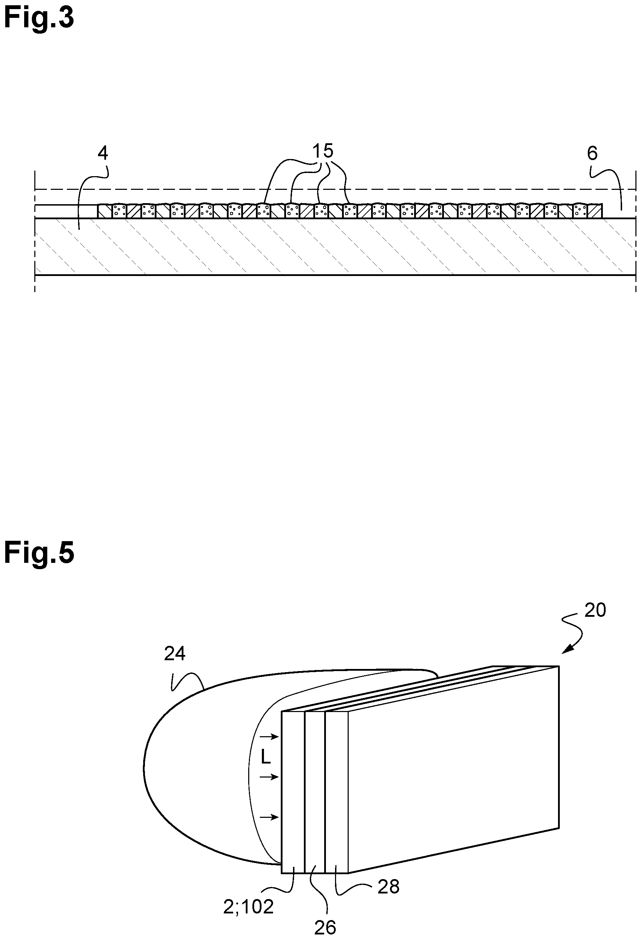

In this embodiment, each finger of an end portion (except one) extends between two fingers of the other end portion without contacting these two fingers so as to leave a space between fingers of an end portion and fingers of the other end portion, which space is filled with material 15, as visible in Figure 3.

This construction enables an effective detection of variations of the electrical property of material 15 caused by its deformation.

As shown in Figure 1, each connection portion 11 of a conductive track 12 may extend up to an edge of the polarizing sheet 4.

In the present embodiment, the polarizing sheet 4 has a substantially rectangular shape with four sides and includes a strip 14 extending from one of these sides. Each connection portion 11 of a conductive track 12 extends in the present case on this strip 14 to an edge of this strip 14, which enables easy connection of the connection portions 11 to corresponding terminals of a connector (*e.g.* a zero insertion force, or ZIF, connector).

The conductive tracks 12 may for instance be made of an electrically conductive transparent or translucent polymer, such as Poly(3,4-ethylene-dioxythiophene), generally called PEDOT.

In this case, the conductive tracks 12 can be deposited on the polarizing sheet 4 by screen printing.

As a possible variation, the conductive tracks 12 may be made of a mesh of metal wires. To enable light to pass through the conductive tracks 12, the mesh is for instance designed such that the portion of cumulated metal wire thickness is below 25% in at least a given direction parallel to the main faces of the polarizing sheet 4. For instance, in a direction parallel to the main faces of the polarizing sheet, metal wires having a 2 µm thickness are placed every 10 µm (thus, in this example, the portion of cumulated metal wire thickness equals 20% in this direction).

In this case, the conductive tracks 12 may for instance be deposited on the polarizing sheet 4 using a roll-to-roll process. According to an alternative solution, grooves may be formed in the polarizing sheet 4 (e.g. using a roll-to-roll process) where the conductive tracks 12 have to be located, and the conductive (metal) tracks 12 may then be deposited into the grooves, possibly by a sputtering process.

Optionally, the film 2 includes a transparent or translucent protection layer 6 covering the sensor 10 and the face of the polarizing sheet 4 where the sensor 10 lies in order to ensure fastening of the sensor 10 onto the polarizing sheet 4.

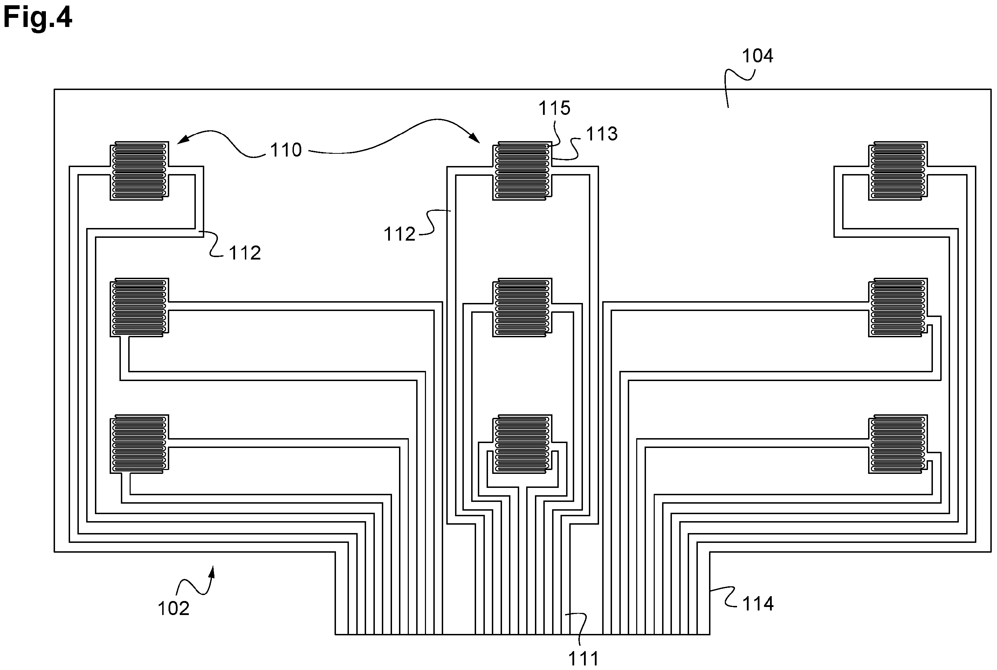

Figure 4 shows another possible embodiment of a film according to the invention.

In this embodiment, the film 102 includes a polarizing sheet 104 and a plurality of sensors 110 (here nine sensors 110) lying on one of the two main faces of the polarizing sheet 104.

The polarizing sheet 104 is of the same type as the polarizing sheet 4 of Figure 1 and will thus not be further described.

Each sensor 110 is designed in the same way as the sensor 10 described above and includes in particular two conductive tracks 112 extending from a connection portion 111 to an end portion 113, and a material 115 that is interposed between both end portions 113 and that has an electrical property varying upon deformation.

The sensors 110 are for instance spaced at regular intervals to cover the polarizing sheet 104.

As shown in Figure 4, in the embodiment described, the polarizing sheet 104 includes a strip 114 laterally extending from a side of the polarizing sheet 104 and the connection portions 111 of the conductive tracks 112 extend over the strip 114 (here up to the edge of the strip 114) for easy connection of the connection portions 111 to respective terminals of a connector (such as a ZIF connector).

The film 2, 102 of any of the embodiments described above can for instance be obtained using a method comprising the following steps (which can be performed in any order):
- depositing a translucent or transparent material having an electrical property varying upon deformation on a main face of a transparent or translucent polarizing sheet (for instance by printing this material onto this main face);
- depositing at least two conductive tracks on the main face (for instance by screen printing, or using a roll-to-roll process, or by forming grooves on the main face, possibly using a roll-to-roll process, and depositing the two conductive tracks into the grooves, possibly using a sputtering process, as already explained).

These steps are performed such that at least a portion of the material is interposed between two end portions of two corresponding conductive tracks so as to form a sensor including this portion of the material and the two conductive tracks.

Figure 5 shows a display 20 including a film, designed for instance in accordance with one of the embodiments presented above.

The display 20 includes (following the path of light):
- a lighting module 24 producing a light beam L;
- a film 2, 102 as described above, which thus includes a polarizing sheet and at least one sensor and which is used as an input polarizer;
- a panel 26 carrying a matrix of elements capable of altering the polarization of incident light in a controllable manner;
- an output polarizer 28.

The film 2, 102 is affixed, for instance by gluing, on the face of the panel 26 facing the lighting module 24, such that the film 2, 102 is interposed between the lighting module 24 and the panel 26.

Preferably, the main face of the film 2, 102 that is affixed to the panel 26 is the main face that is opposite to the main face carrying the sensor 10 (or sensors 110).

The output polarizer 28 is glued on the main face of the panel 26 opposite to the lighting module 26. A front glass (not represented) may additionally be glued (for instance using an optical glue) onto the output polarizer.

The elements of the panel 26 mentioned above are here liquid crystal cells, which can each alter the polarization of light passing through it depending on a voltage applied to the concerned liquid crystal cell.

The light beam L produced by the lighting module is directed towards the panel 26 and thus crosses the film 2, 102; light having a particular polarization (selected by the polarizing sheet of the film 2, 102) then passes through the panel 26 with a possible and controllably variable change of its polarization at each element (or cell) and a controllable portion of the light thus emerges from the output polarizer 28 at the level of each element.

As the film 2, 102 is located between the light module 24 and the panel 26 in the present embodiment, the sensor 10 or sensors 110 (even if not totally transparent) are not visible by a user of the display 20 (who watches the display 20 by looking at the output polarizer 28).

As noted above, Figure 5 is a schematic representation but the thickness of the structure combining the film 2, 102, the panel 26 and the output polarizer 28 is actually much smaller in practice than the dimensions of the main faces of this structure.

Thus, when the user touches or presses on the display 20 on its front side (*i.e.* on the side of the output polarizer 28), *e.g.* by pressing on the front glass (mentioned above), this results on a deformation of the whole structure (via the glue and the output polarizer 28 when the front glass is pressed as just mentioned), including a deformation of the film 2, 102 (although it is located on the opposite side of the structure with respect to the user's action).

As explained above, the deformation of the film 2, 102 causes a variation in the electrical property of the material 15, 115, which variation can be detected using an appropriate electronic circuit connected to the conductive tracks 12, 112.

When the film glued to the panel 26 is a film with a plurality of sensors 110, as in the embodiment show in Figure 4, combining measures respectively made by the plurality of sensors makes it possible to determine the location where the user touches the display 20.

## Claims

1. A film (2; 102) comprising a transparent or translucent polarizing sheet (4; 104) defining two main faces, **characterised in that** a sensor (10; 110) including a translucent or transparent material (15; 115) having an electrical property varying upon deformation lies on one of said main faces.

2. A film according to claim 1, wherein the sensor (10; 110) further includes at least one conductive track (12; 112) contacting said material (15; 115).

3. A film according to claim 2, wherein said at least one conductive track includes two conductive tracks (12; 112) terminating each at an end portion (13; 113) and wherein said material (15; 115) is interposed between both end portions (13; 113) and contacts both end portions (13; 113).

4. A film according to claim 3, wherein each end portion (13; 113) has a finger structure.

5. A film according to any of claims 2 to 4, wherein said at least one conductive track (12; 112) is made of an electrically conductive transparent or translucent polymer.

6. A film according to any of claims 2 to 4, wherein said at least one conductive track (12; 112) is made of a mesh of metal wires.

7. A film according to any of claims 1 to 6, wherein said material (15; 115) is a nanoparticle ink printed on said one of said main faces.

8. A film according to any of claims 1 to 6, wherein said material (15; 115) is a piezoelectric ink printed on said one of said main faces.

9. A display (20) including:
- a panel (26) carrying a matrix of elements capable of altering the polarization of incident light in a controllable manner;
- a film (2; 102) according to any of claims 1 to 8 covering at least a portion of the panel (26).

10. A display according to claim 9, further comprising a lighting module (24) capable of producing a light beam towards the panel (26), wherein said film (2; 102) is interposed between the lighting module (24) and the panel (26).

11. A method for producing a film (2; 102), including the following steps:
- depositing a translucent or transparent material (15; 115) having an electrical property varying upon deformation on a main face of a transparent or translucent polarizing sheet (4; 104);
- forming a sensor (10; 110) including said material (15; 115).

12. A method according to claim 11, wherein said material (15; 115) is printed onto said main face.
